# EUROPEAN PATENT APPLICATION

(11) **EP 3 171 308 A1**
(43) Date of publication of application: **24.05.2017**
(21) Application number: 16174298.6
(22) Date of filing: 10.08.2016
(51) Int. Cl.: G06Q 10/10, G06Q 10/02

(54) **INFORMATION PROCESSING METHOD, INFORMATION PROCESSING APPARATUS, TERMINAL, AND SERVER**

(30) Priority: 17.11.2015 CN 201510792570
(71) Applicant: Xiaomi Inc., Beijing 100085 (CN)
(72) Inventor: WANG, Pingze, 100085 Haidian District (CN); ZHANG, Tao, 100085 Haidian District (CN); CHEN, Zhijun, 100085 Haidian District (CN)
(74) Representative: Kudlek, Franz Thomas

(57) **Abstract**

The present invention is related to an information processing method, an information processing apparatus, a terminal, and a server. The method comprises: when information is received, judging whether the information is a predetermined type of information; when the information is the predetermined type of information, matching the predetermined type of information with a key word template; extracting key information in the information based on the successfully matched key word template. By employing the embodiments of the present invention, it is able to accurately identify and extract key information such as train number, seat, departure/arrival station, departure/arrival time, order number, passenger from ticket information in which the key information is distributed very intensively, so as to remind the user based on the key information to thereby improve the user experience.

## Description

### TECHNICAL FIELD

The present invention relates to the technical field of mobile communication, in particular to an information processing method, an information processing apparatus, a terminal, and a server.

### BACKGROUND

In the related art, a user can buy various tickets such as train ticket and air ticket from a plurality of sources, and after a ticket is successfully booked on a website, generally an order inform short message will be sent to the user, which order inform short message usually comprises contents such as the boarding location and time, and seat number and the like, and the amount of information is very large.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In order to overcome problems existing in the relevant technologies, the present invention provides an information processing method, an information processing apparatus, a terminal, and a server according to the subject matter of the independent claims.

According to a first aspect of the embodiment of the present invention, there is provided an information processing method, the method comprising:
when information is received, judging whether the information is a predetermined type of information;
when the information is the predetermined type of information, matching the predetermined type of information with a key word template;
extracting key information in the information based on the successfully matched key word template.

Optionally, the key word template comprises a plurality of key words which are individually stored.

Optionally, each key word in the key word template is individually identified using a preset identifier to construct a template structure.

Optionally, the method further comprises:
extracting a name of a ticket-booking agency in the key word template;
storing key word templates having the same name of a ticket-booking agency in a same template set.

Optionally, the method further comprises:
for each template set, performing a priority calculation to each key word template comprised in the template set based on a matching set thereof;
performing a topological sorting to each key word template pertaining to the same template set based on the calculated priority.

Optionally, performing a priority calculation to each key word template comprised in the template set based on a matching set thereof comprises:
determining a short message set that can be matched with each key word template in the template set;
when one short message set is a proper subset of another short message set, determining that the priority of the key word template corresponding to the one short message set is higher than the priority of the key word template corresponding to the another short message set;
when one short message set is identical to another short message set, determining that the priority of the key word template corresponding to the one short message set is the same as the priority of the key word template corresponding to the another short message set;
retaining one of the key word templates having the same priority, and deleting other key word templates having the same priority.

Optionally, judging whether the information is a predetermined type of information comprises:
extracting source information in the information, the source information comprising a name of a ticket-booking agency and/or a number of an income message;
judging whether the source information is a source of the predetermined type of information;
when it is judged that the source information is the source of the predetermined type of information, determining the information as the predetermined kind of information.

Optionally, judging whether the source information is a source of the predetermined type of information comprises:
receiving and storing source information sent from a server;
matching the source information in the information with the stored source information;
when the source information in the information is successfully matched with the stored source information, determining the source information in the information as the source of the predetermined type of information.

Optionally, the method further comprises:
when source updated information sent by the server is received, updating the stored source information based on the source updated information.

Optionally, judging whether the source information is a source of the predetermined type of information comprises:
reading a preset filtering condition;
filtering the source information in the information based on the filtering condition;
determining the source information that matches with the filtering condition as the source of the predetermined type of information.

Optionally, the method further comprises:
obtaining the predetermined type of information received within a set time period;
extracting key words in the predetermined type of information;
constructing a key word template based on the key words.

Optionally, the method further comprises:
when information conforming to the filtering condition is received for the first time, and no key word template corresponding to the information is stored, extracting the key words in the information;
constructing a key word template based on the key words.

Optionally, the method further comprises:
when information conforming to the filtering condition is received subsequently, extracting key words in the received information;
regulating and updating the key word template based on the extracted key words.

Optionally, the method further comprises:
when the source information comprising the filtering condition is the source information that has not been stored, storing the source information in the key word template individually.

Optionally, extracting key information in the information based on the key word template successfully matched comprises:
abstracting key information corresponding to the preset identifier from the information based on the template structure of the successfully matched key word template.

Optionally, the method further comprises:
applying the key information.

Optionally, applying the key information comprises:
displaying the key information with a preset display format.

Optionally, applying the key information comprises:
extracting a key event information in the key information.
recording the key event information in a notepad/reminder time.

Optionally, applying the key information comprises:
querying life information based on a date in the key information.
sending the life information to a user,
wherein, the life information comprises one or more of weather information, accommodation information, dietary information, dressing information, traffic information, shopping information and communication information.

According to a second aspect of the embodiment of the present invention, there is provided an information processing method, the method comprising:
obtaining information received within a set time period;
constructing a key word template based on key words in the information
sending the key word template to a terminal to cause the terminal to, when receiving a predetermined type of information, extract key information in the predetermined type of information based on the successfully matched key word template.

Optionally, constructing a key word template based on key words in the information comprises:
extracting the key words in the information;
individually identifying each key word using a preset identifier, and individually storing each key word in the key word template constructed.

Optionally, the method further comprises:
extracting a name of a ticket-booking agency in the key word template;
storing key word templates having the same name of a ticket-booking agency in a same template set.

Optionally, the method further comprises:
for each template set, performing a priority calculation to each key word template comprised in the template set based on a matching set thereof;
performing a topological sorting to each key word template pertaining to the same template set based on the calculated priority.

Optionally, performing a priority calculation to each key word template comprised in the template set based on a matching set thereof comprises:
determining a short message set that can be matched with each key word template in the template set;
when one short message set is a proper subset of another short message set, determining that the priority of the key word template corresponding to the one short message set is higher than the priority of the key word template corresponding to the another short message set;
when one short message set is identical to another short message set, determining that the priority of the key word template corresponding to the one short message set is the same as the priority of the key word template corresponding to the another short message set;
retaining one of the key word templates having the same priority, and deleting other key word templates having the same priority.

Optionally, the method further comprises:
when an information arranging format of the received information is inconsistent with a stored information arranging format, extracting key words in the information;
updating the key word template based on the key words.

According to a third aspect of the embodiments of the present invention, there is provided an information processing apparatus, the apparatus comprising:
a judging module configured to, when information is received, judge whether the information is a predetermined type of information;
a matching module, configured to, when the judging module judges the information as the predetermined type of information, match the predetermined type of information with key word template;
a first extracting module configured to extract key information in the information based on the key word template successfully matched by the matching module.

Optionally, the key word template matched by the matching module comprises a plurality of key words which are individually stored.

Optionally, each key word in the key word template matched by the matching module is individually identified using a preset identifier to construct a template structure.

Optionally, the apparatus further comprises:
a second extracting module configured to extract a name of a ticket-booking agency in the key word template;
a storing module configured to store key word templates having the same name of a ticket-booking agency extracted by the second extracting submodule in a same template set.

Optionally, the apparatus further comprises:
a first calculating module configured to, for each template set, perform a priority calculation to each key word template comprised in the template set based on a matching set thereof;
a first sorting module configured to perform a topological sorting to each key word template pertaining to the same template set based on the priority calculated by the first calculating module.

Optionally, the first calculating module comprises:
a first determining submodule configured to determine a short message set that can be matched with each key word template in the template set;
a second determining submodule configured to, when the first determining submodule determines one short message set as a proper subset of another short message set, determine that the priority of the key word template corresponding to the one short message set is higher than the priority of the key word template corresponding to the another short message set;
a third determining submodule configured to, when the second determining submodule determines one short message set as identical to another short message set, determine that the priority of the key word template corresponding to the one short message set is the same as the priority of the key word template corresponding to the another short message set;
a first processing submodule configured to retain one of the key word templates having the same priority as determined by the third determining submodule, and delete other key word templates having the same priority.

Optionally, the judging module comprises:
a first extracting submodule configured to extract source information in the information, the source information comprising a name of a ticket-booking agency and/or a number of an income message;
a first judging submodule configured to judge whether the source information extracted by the first extracting submodule is a source of the predetermined type of information;
a fourth determining submodule configured to, when the first judging submodule judges that the source information is the source of the predetermined type of information, determine the information as the predetermined type of information.

Optionally, the first judging submodule comprises:
a first storing submodule configured to receive and store the source information sent by a server;
a source matching submodule configured to match the source information in the information with the source information stored in the first storing submodule;
a first determining submodule configured to, when the source matching submodule successfully matches the source information in the information with the stored source information, determine the source information in the information as the source of the predetermined type of information.

Optionally, the first judging submodule further comprises:
an updating submodule configured to, when source updated information sent by the server is received, update the stored source information based on the source updated information.

Optionally, the first judging submodule comprises:
a reading submodule configured to read a preset filtering condition;
a filtering submodule configured to filter the source information in the information based on the filtering condition read by the reading submodule;
a second determining submodule configured to determine the source information that matches with the filtering condition as the source of the predetermined type of information.

Optionally, the first judging submodule further comprises:
an obtaining submodule configured to obtain the predetermined type of information received within a set time period;
a first extracting submodule configured to extract key words in the predetermined type of information obtained by the obtaining submodule;
a first constructing submodule configured to construct a key word template based on the key words extracted by the first extracting submodule.

Optionally, the first judging submodule further comprises:
a second extracting submodule configured to, when information conforming to the filtering condition is received for the first time, and no key word template corresponding to the information is stored, extract the key words in the information;
a second constructing submodule configured to construct a key word template based on the key words extracted by the second extracting submodule.

Optionally, the first judging submodule further comprises;
a third extracting submodule configured to, when information conforming to the filtering condition is received subsequently, extract key words in the received information;
an updating submodule configured to regulate and update the key word template based on the key words extracted by the third extracting submodule.

Optionally, the first judging submodule further comprises:
a second storing submodule configured to, when the source information comprising the filtering condition is the source information that has not been stored, store the source information in the key word template.

Optionally, the first obtaining module comprises:
an abstracting submodule configured to abstract key information corresponding to the preset identifier from the information based on the template structure of the successfully matched key word template.

Optionally, the apparatus further comprises:
an applying module configured to apply the key information.

Optionally, the applying module comprises:
a display submodule configured to display the key information with a preset display format.

Optionally, the applying module comprises:
a second extracting submodule configured to extract key event information in the key information;
a recording submodule configured to record the key event information extracted by the second extracting submodule in a notepad/reminder time.

Optionally, the applying module comprises:
a querying submodule configured to query life information based on a date in the key information;
a sending submodule configured to sending the life information queried by the querying submodule to a user,
wherein, the life information comprises one or more of weather information, accommodation information, dietary information, dressing information, traffic information, shopping information and communication information.

According to a fourth aspect of the embodiments of the present invention, there is provided an information processing apparatus, the apparatus comprising:
an obtaining module configured to obtain information received within a set time period;
an establishing module configured to establish a key word template based on key words in the information obtained by the obtaining module;
a sending module configured to send the key word template established by the establishing module to a terminal to cause the terminal to, when receiving the predetermined type of information, extract key information in the predetermined type of information based on the successfully matched key word template.

Optionally, the establishing module comprises:
a third extracting submodule configured to extract key words in the information;
a first storing submodule configured to individually identify each key word extracted by the third extracting submodule using a preset identifier, and individually store each key word in the constructed key word template.

Optionally, the establishing module further comprises
a fourth extracting submodule configured to extract a name of a ticket-booking agency in the key word template;
a second storing submodule configured to store the key word templates having the same name of a ticket-booking agency extracted by the fourth extracting submodule in a same template set.

Optionally, the establishing module further comprises:
a second calculating submodule configured to, for each template set, perform a priority calculation to each of the key word template based on a matching set thereof comprised in the template set;
a second sorting submodule configured to perform a topological sorting to each key word template pertaining to the same template set based on the priority calculated by the second calculating submodule.

Optionally, the second calculating submodule comprises:
a fifth determining submodule configured to determine a short message set that can be matched with each key word template in the template set;
a sixth determining submodule configured to, when the fifth determining submodule determines one short message set as a proper subset of another short message set, determine that the priority of the key word template corresponding to the one short message set is higher than the priority of the key word template corresponding to the another short message set;
a seventh determining submodule configured to, when the sixth determining submodule determines one short message set as identical to another short message set, determine that the priority of the key word template corresponding to the one short message set is the same as the priority of the key word template corresponding to the another short message set;
a second processing submodule configured to retain one of the key word templates having the same priority as determined by the seventh determining submodule, and delete the other key word templates having the same priority.

Optionally, the establishing module further comprises
a fifth extracting submodule configured to, when an information arranging format of the received information is inconsistent with a stored information arranging format, extract key words in the information;
an updating submodule configured to update the corresponding key word template based on the key words extracted by the fifth extracting submodule.

According to a fifth aspect of the embodiments of the present invention, there is provided a server, comprising: a processor; a memory for storing instructions executable by the processor; wherein, the processor is configured to:
when information is received, judge whether the information is a predetermined type of information;
when the information is the predetermined type of information, match the predetermined type of information with a key word template;
extract key information in the information based on the successfully matched key word template.

According to a sixth aspect of the embodiments of the present invention, there is provided a server, comprising: a processor; a memory for storing instructions executable by the processor; wherein the processor is configured to:
obtain information received within a set time period;
construct a key word template based on key words in the information
send the key word template to a terminal to cause the terminal to, when receiving a predetermined type of information, extract key information in the predetermined type of information based on the successfully matched key word template.

In one particular embodiment, the steps of the information processing method are determined by computer program instructions.

Consequently, according to a seventh aspect, the invention is also directed to a computer program for executing the steps of an information processing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiment of the present invention can include the following advantageous effect:
in the present invention, the terminal can judge whether the received information is a predetermined type of information, when the information is the predetermined type of information, match the predetermined type of information with a key word template, and then extract key information in the information based on the key word template successfully matched. The present invention is able to accurately identify and extract key information such as train number, seat, departure/arrival station, departure/arrival time, order number, passenger from ticket information in which the key information is distributed very intensively, so as to remind the user based on the key information, and thereby improves the user experience.

In the present invention, the terminal can store key word templates pertaining to a same ticket-booking agency in the same template set to improve accuracy and efficiency of the subsequent matching of the templates.

In the present invention, the terminal can perform a priority calculation to the key word templates in the same template set, and perform sorting based on the priority, so that when the same information can be successfully matched with a plurality of key word templates, the information is matched to the key word template that has the highest priority.

In the present invention, the terminal can determine the priority based on a short message set that can be matched to each key word template, and for the key word templates having the same priority, only one key word template is retained, so as to prevent redundant information from occupying the memory.

In the present invention, the terminal can determine whether the information is a predetermined type of information (i.e., the ticket information) based on the source information of the information, i.e., the company name or the number of an income message in the information, and such a method can accurately determine whether the information is the predetermined type of information.

In the present invention, the terminal can receive and store the source information sent from a server, and match the source information in the received information with the stored source information.

In the present invention, the terminal can update the stored source information when it receives the source updated information sent by the server, so as to always store the latest source information.

In the present invention, the terminal can set a filtering condition, and match the source information with the filtering condition, so as to filter out information from the source of the predetermined type of information.

In the present invention, the terminal can regulate and update the constructed key word template based on the subsequently received information conforming to the filtering condition, so as to improve the matching accuracy of the key word template.

In the present invention, the terminal can individually store the source information comprising the filtering condition that has not been stored in the key word template to enrich contents of the key word template, thereby improving an accuracy of the matching.

In the present invention, the terminal can extract key information in a word-syntax mode, thereby realizing an accurate abstraction of intensive knowledge.

In the present invention, the terminal can display the key information in a preset display format such as color and arrangement, so that the user can quickly get the key information.

In the present invention, the terminal can record key event information in the key information in a notepad or a reminder time, so as to remind the user to prevent the user from forgetting important events.

In the present invention, the terminal can obtain life information based on the key information, which facilitates trips of the user, provides conveniences in various aspects for the user, and improves the user experience.

In the present invention, the server can establish a key word template based on the key words in a plurality of information, and send the constructed key word template to the terminal, so that the terminal, when receiving a predetermined type of information, can extract the key information based on the successfully matched key word template, which facilitates reminding to the user based on the key information, and thereby improves the user experience.

In the present invention, the server can individually identify the key word using a preset identifier, and individually store each key word in the constructed key word template.

In the present invention, the server can store key word templates of a same ticket-booking agency in a same template set, so as to improve the efficiency of the subsequent template matching.

In the present invention, the server can perform a priority calculation to the key word templates in a same template set, and perform sorting based on the priority, so that when the same information can be successfully matched with a plurality of key word templates, the information is matched to the key word template that has the highest priority.

In the present invention, the server can determine the priority based on a short message set that can be matched to each key word template, and for key word templates having the same priority, only one key word template is retained, so as to prevent redundant information from occupying the memory.

In the present invention, when an arranging format of the received information is inconsistent with the stored arranging format, the server can update the corresponding key word template based on the key words, so as to ensure an accuracy of the key word template.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing an information processing method according to an exemplary embodiment.
Fig. 2 is a flowchart showing another information processing method according to an exemplary embodiment.
Fig. 3 is a flowchart showing another information processing method according to an exemplary embodiment.
Fig. 4 is a flowchart showing another information processing method according to an exemplary embodiment.
Fig. 5 is a flowchart showing another information processing method according to an exemplary embodiment.
Fig. 6 is a flowchart showing another information processing method according to an exemplary embodiment.
Fig. 7 is a schematic diagram of application scenes of the information processing according to an exemplary embodiment.
Fig. 8 is a block diagram showing an information processing apparatus according to an exemplary embodiment.
Fig. 9 is a block diagram showing another information processing apparatus according to exemplary embodiment.
Fig. 10 is a block diagram showing another information processing apparatus according to an exemplary embodiment.
Fig. 11 is a block diagram showing another information processing apparatus according to an exemplary embodiment.
Fig. 12 is a block diagram showing another information processing apparatus according to an exemplary embodiment.
Fig. 13 is a block diagram showing another information processing apparatus according to an exemplary embodiment.
Fig. 14 is a block diagram showing another information processing apparatus according to an exemplary embodiment.
Fig. 15 is a block diagram showing another information processing apparatus according to an exemplary embodiment.
Fig. 16 is a block diagram showing another information processing apparatus according to an exemplary embodiment.
Fig. 17 is a block diagram showing another information processing apparatus according to an exemplary embodiment.
Fig. 18 is a block diagram showing another information processing apparatus according to an exemplary embodiment.
Fig. 19 is a block diagram showing another information processing apparatus according to an exemplary embodiment.
Fig. 20 is a block diagram showing another information processing apparatus according to an exemplary embodiment.
Fig. 21 is a block diagram showing another information processing apparatus according to an exemplary embodiment.
Fig. 22 is a block diagram showing another information processing apparatus according to an exemplary embodiment.
Fig. 23 is a block diagram showing another information processing apparatus according to an exemplary embodiment.
Fig. 24 is a block diagram showing another information processing apparatus according to an exemplary embodiment.
Fig. 25 is a block diagram showing another information processing apparatus according to an exemplary embodiment.
Fig. 26 is a block diagram showing another information processing apparatus according to an exemplary embodiment.
Fig. 27 is a block diagram showing another information processing apparatus according to an exemplary embodiment.
Fig. 28 is a block diagram showing another information processing apparatus according to an exemplary embodiment.
Fig. 29 is a block diagram showing another information processing apparatus according to an exemplary embodiment.
Fig. 30 is a block diagram showing another information processing apparatus according to an exemplary embodiment.
Fig. 31 is a diagram showing a structure of an information processing apparatus according to an exemplary embodiment.
Fig. 32 is a diagram showing a structure of another information processing apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the present invention, the terms used are aimed at describing the specific embodiments but not limiting the present invention. The terms "a", "the" and "this" used in the present invention and the accompanying claims which are in singular forms are also aimed at comprising plural forms, unless the context clearly indicates other meanings. It shall also be appreciated that the terms "and/or" used in the text refers to one or more correlated items listed, comprising any or all possible combinations thereof.

It shall be appreciated that, although terms such as first, second and third may be employed in the present invention to describe various information, the information should not be limited to the terms. These terms are only used to distinguish information of the same type from each other. For example, in the case of not departing from the scope of the present invention, the first information may also be called the second information, and similarly, the second information may also be called the first information. Depending on the context, for example, the word "if" used herein can be explained as "while ..." or "when ..." or "responsive to determination".

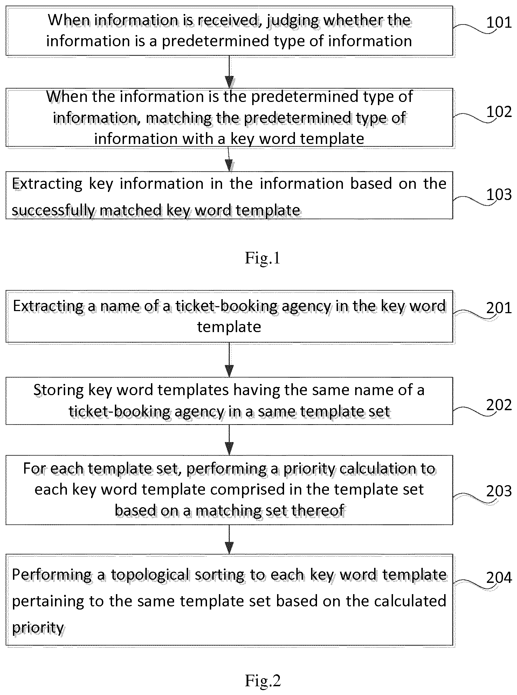

As shown in Fig. 1, Fig. 1 is a flowchart showing an information processing method according to an exemplary embodiment, the method can be used in a terminal, and comprises the following steps:
Step 101: when information is received, judging whether the information is a predetermined type of information.

In the present invention, the terminal may be any intelligent terminals with a networking function, for example, it may specifically be a cell phone, a tablet computer and a PDA (Personal Digital Assistant), or the like. Wherein, the terminal can access a router via a wireless local area network, and visit a server on a public network via the router.

Wherein, the information may be a short message, the predetermined type of the information may be ticket information, and the ticket type comprises one or more of train ticket, air ticket, entrance ticket, film ticket and show ticket, etc.. In the steps of the present invention, whether the information is the predetermined type of information can be determined from a name of a ticket-booking agency and a number of an income message in the short message.

Step 102: when the information is the predetermined type of information, matching the predetermined type of information with a key word template.

In the embodiments of the present invention, the key word template is a template established by a server for ticket information. The template comprises a plurality of key words which are individually stored, and each key word in the key word template is individually identified using a preset identifier. The key words may comprise multiple pieces of information of: order number, name of the passenger, departure date, train number, type of train or flight, seat level, carriage number, seat number, time duration, departure station and arrival station.

Step 103: extracting key information in the information based on the successfully matched key word template.

In the steps of the present invention, the key information is namely the information that matches with the key words in the key word template.

In the above embodiment, the terminal can judge whether the received information is a predetermined type of information, when the information is the predetermined type of information, match the predetermined type of information with a key word template, and then extract key information in the information based on the successfully matched key word template. The present invention is able to accurately identify and extract key information such as train number, seat, departure/arrival station, departure/arrival time, order number, passenger from the ticket information in which the key information is distributed very intensively, so as to remind the user based on the key information, and thereby improves the user experience.

As shown in Fig. 2, Fig. 2 is a flowchart showing another information processing method according to an exemplary embodiment, the method can be used in a terminal, and may further comprises the following steps:
step 201: extracting a name of a ticket-booking agency in the key word template.

Wherein, the name of a ticket-booking agency may be the name of the ticket-booking agencies such as a train station, a travel agency and a ticketing company, for example, 12306 and Ali travel • Go, etc..

Step 202: storing key word templates having the same name of a ticket-booking agency in a same template set.

In the embodiments of the present invention, key word templates of a same ticket-booking agency are stored in the same template set to improve the efficiency of the subsequent template matching. Since the sending numbers of the same ticket-booking agency have certain regularities, such as having an identical number prefix or number suffix, and the content in the sent information generally comprises some specific key words, such as: company name, therefore a mapping relationship can be constructed based on the regularities of the sending numbers and the key words in the short messages, i.e., mapping from the number and the key words to the template set.

Step 203: for each template set, performing a priority calculation to each key word template comprised in the template set based on a matching set thereof;

In other words, in the steps of the present invention, the priority of each of the templates in the same template set is calculated. In a disclosed embodiment, the priority calculation is performed by the following methods:
determining a short message set that can be matched with each key word template in the template set; when one short message set is a proper subset of another short message set, determining that the priority of the key word template corresponding to the one short message set is higher than the priority of the key word template corresponding to the another short message set; when one short message set is identical to another short message set, determining that the priority of the key word template corresponding to the one short message set is the same as the priority of the key word template corresponding to the another short message set; retaining one of the key word templates having the same priority, and deleting other key word templates having the same priority.

Explanations will be given in the following by taking a specific example:
short message: "[Railway Customer Service] (1/2) Order No. XXXXXXXXXX, Ms. Zhang, you have bought tickets for train D8045, carriage No. 06, seat No. 03A and seat No. 03B on April, 14, depart from Anshan West at 11:09. Zhang Wuji, Zhao Min, please exchange for paper tickets as soon as possible".

This short message can be matched respectively with two key word templates. Wherein,
the first key word template is:
"<?seat number>" of <?train ticket order template>" matches "03A"; "<?departure station>" matches", No. 03B, Anshan West"; "<?passenger>" matches "Zhang Wuji, Zhao Min".

The second key word template is:
"<?seat number 1>" of <?train ticket order template>" matches "03A"; "<?seat number 2>" matches "03B"; "<?departure station>" matches "Anshan West; "<?passenger>" matches "Zhang Wuji, Zhao Min".

Since two tickets have been booked in the short message, while the second key word template comprises information of two seat numbers, therefore the present invention prefers that the short message can be matched with the second key word template in priority. Therefore, in this situation, there is a need to perform a priority ranking to the key word templates, with a hope that more accurate key word templates will have higher priorities.

Based on this premise, regarding the key word template A and the key word template B, assume that the short message set that can be matched with the key word template A is S_A, and the short message set that can be matched with the key word template B is S_B; if the short message set S_A is a proper subset of the short message set S_B, i.e., the key word template B can be matched to all the short messages to which the key word template A can be matched, then, the priority of the key word template A is higher than that of the key word template B.

If the short message set S_B is a proper subset of the short message set S_A, i.e., the short message set A can be matched to all the short messages to which the short message set B can be matched, then, the priority of the key word template B is higher than that of the key word template A.

If the short message set S_B is equal to the short message set S_A, the key word template A is equivalent to the key word template B, thus it is not necessary to store two key word templates of the same priority, and any one of the key word template A or the key word template B can be deleted.

Step 204: performing a topological sorting to each key word template pertaining to the same template set based on the calculated priority.

Through the above step, a topological sorting can be performed to all the key word templates in the template set of each ticketing company based on the priority defining relationship between the key word templates. For example, the key word templates can be sorted based on an order from high priority to low priority. The key word template with a high priority in the sorting will be matched in priority.

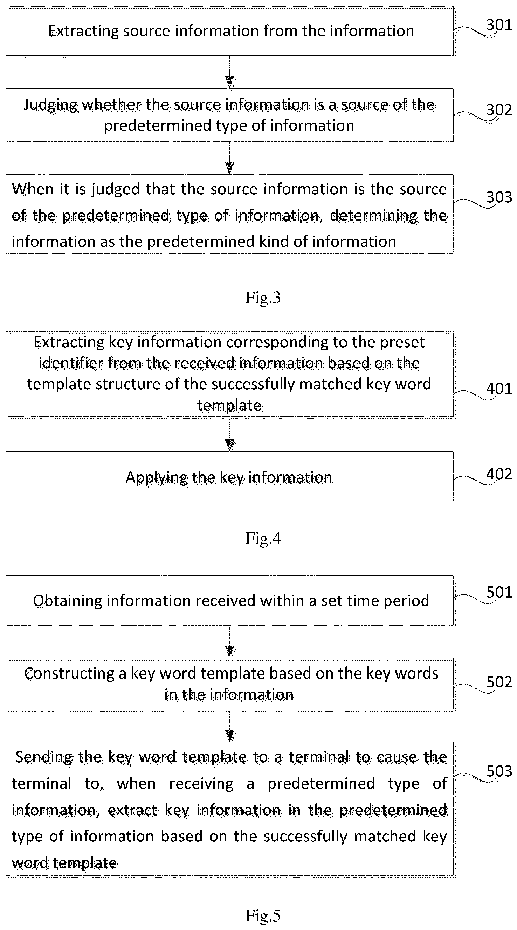

As shown in Fig. 3, Fig. 3 is a flowchart showing another information processing method according to an exemplary embodiment of the present invention, the method can be used in a terminal, and on the basis of the embodiment shown in Fig. 1, the above step 101 may also comprise the following steps:
Step 301: extracting source information from the information.

In the steps of the present invention, the source information may comprise a name of a ticket-booking agency (company) and/or a number of an income message, as regards the ticket information, the source information is the name of a ticket-booking agency or the name of a company, or the number of an income message; as regards the credit card billing information, the source information is the name of a bank or the number of an income message.

Step 302: judging whether the source information is a source of the predetermined type of information.

In the embodiments of the present invention, the source of the predetermined type of information refers to the name of a ticket-booking agency or the number of an income message with respect to the ticket information.

Step 303: when it is judged that the source information is the source of the predetermined type of information, determining the information as the predetermined kind of information.

In the embodiments of the present invention, the source of the predetermined type of information may be the source of the predetermined type of information pre-stored in the terminal, for example: receiving and storing the source information transmitted from the server, thus the source information in the received information can be matched with the stored source information; when the source information in the received information is successfully matched with the stored source information, determining that the source information in the information is the source of the predetermined type of information.

In this way, when the source information is updated at the server side, the source updated information can also be sent to the terminal, and the terminal updates the stored source information based on the source updated information, so as to perform matching for the source information in the received information more accurately.

In another disclosed implementation, the terminal may also be provided with a filtering condition, then, after the source information in the received information is extracted, the extracted source information can be filtered based on the filtering condition, and the source information that matches with the filtering condition is determined as the source of the predetermined type of information. Wherein, the filtering condition may also comprise information such as the name of a ticket-booking agency and the phone number of the ticket-booking agency.

In another disclosed implementation, when the terminal receives information conforming to the filtering condition for the first time and does not store a key word template corresponding to the information, the terminal extracts key words from the information, and constructs a key word template based on the key words. Thus, when the terminal receives information conforming to the filtering condition subsequently, it can extract the key words from the received information, and regulate and update the key word template constructed based on the extracted key words.

In another disclosed implementation, when the source information comprising the filtering condition is the source information that has not been stored, the source information is individually stored in the key word template.

In another disclosed implementation, the terminal can obtain the predetermined type of information (ticket information) received within a set time period, extract key words in the predetermined type of information, and construct a key word template based on the key words.

As shown in Fig. 4, Fig. 4 is a flowchart showing another information processing method according to an exemplary embodiment of the present invention, the method can be used in a terminal, and on the basis of the embodiment shown in Fig. 1, the above step 103 may comprise the following steps:
Step 401: extracting key information corresponding to the preset identifier from the received information based on the template structure of the successfully matched key word template.

Following the step 401, the step 103 may also comprise:
Step 402: applying the key information.

In a disclosed implementation, applying the key information may comprise: displaying the key information in a preset display format. For example, identifying and displaying the key information with a particular color.

In another disclosed implementation, applying the key information may comprise: extracting key event information in the key information, and recording the key event information in a notepad/reminder time. In this way, timely reminding to the user can be realized, such as to remind the user at a preset time before the departure time, so that the user can reasonably arrange his time to avoid missing the departure of the train.

In another disclosed implementation, applying the key information may comprise: querying life information based on a date in the key information; sending the life information to the user, wherein the life information comprises one or more of weather information, accommodation information, dietary information, dressing information, traffic information and shopping information.

For example, if the user is on a business trip to a place, the destination and the arrival date can be determined through the key words in the ticket information, thus the information about the destination at the arrival date can be determined, such as weather, locations and price levels of hotels, restaurant information around the hotels, temperature of the destination and dressing suggestions, travel suggestions in the destination, special local products and shopping information, etc., therefore the information can be provided to the user to facilitate the travel of the user and provide conveniences for the user in multiple aspects.

Besides, the terminal may also extract the train number information and the arrival information in the ticket-booking short message received each time. If the number of trips belonging to a same train number and location in the extracted information is greater than a set threshold, or if the number of trips belonging to a same train number and location in the extracted information is higher than a set proportion, the train number and location will be stored as the common information of the user. Thus, based on the common information, the terminal can calculate the possible time of the next trip, and can send a reminding information to the user to remind the user to buy ticket before the possible date of the next trip, or, before the date of a trip, send weather conditions at the departure station and the arrival station to the user in advance, or, perform automatic ticketing in advance, or, cooperate with 12306 and send ticketing information to 12306 to book a ticket at a fixed time, or, during spring festival, send discount information of family plan to the user or automatically open the family plan, or, recommend hotel discount information and so on. The manners of reminding the user based on the order information are not limited to the above listed methods.

As shown in Fig. 5, Fig. 5 is a flowchart showing another information processing method according to exemplary embodiment of the present invention, the method can be used in a server, and the method comprises the following steps:
Step 501: obtaining information received within a set time period.

In the embodiments of the present invention, the server can obtain several pieces of information received in a plurality of terminals.

Step 502: constructing a key word template based on the key words in the information.

Wherein, the key words may be information such as "train number", "departure time", "seat number" and "ticket number" and so on.

Step 503: sending the key word template to a terminal to cause the terminal to, when receiving a predetermined type of information, extract key information in the predetermined type of information based on the successfully matched key word template.

Specific examples will be taken in the following to explain the establishing process of a key word template.

For example, regarding the following short message for a train ticket order:
" [Railway Customer Service] Order No. XXXXXXXXXX, Mr. Zhang, you have bought a ticket for train G7566, carriage 05, seat No. 10B on June 26, depart from Hefei Sourth at 13:44. Zhang Wuji, please exchange for a paper ticket as soon as possible".

By extracting the key words "order number", "passenger" and "departure date", etc., the following key word template can be obtained:
<?train ticket order template>→ " [Railway Customer Service] Order number <?order number>, <?appellation>, you have bought a ticket for train <?train number>, carriage <?carriage number>, seat <?seat number> on <?departure date>, depart from <?departure station> at <?departure time>. <?passenger>, please exchange for a paper ticket as soon as possible".

Regarding the following short message for a train ticket order:
[Railway Customer Service] Order No. XXXXXXXXXX, Mrs. Zhang, you have bought tickets for train D8045, carriage No. 06, seat No. 03A and seat No. 03B on April 14, depart from Anshan West at 11:09. Zhang Wuji, Zhao Min, please exchange for paper tickets as soon as possible".

By extracting the key words "order number", "passenger", "departure date" and "seat number", etc., the following key word template can be obtained:
<?train ticket order template> " [Railway Customer Service] Order number <?order number>, <?appellation>, you have bought tickets for train <?train number>, carriage <?carriage number>, seat <?seat number 1> and seat <?seat number 2> on <?departure date>, depart from <?departure station> at <?departure time>. <?passenger>, please exchange for paper tickets as soon as possible".

Wherein, the key word template employs a context-free grammar which is expressed as follows:
<?order number> → <#ENG><#NUM>
<?appellation> → Mr. <*>|Ms. <*>
<?departure date> → MM month dd day
<?train number> → <#ENG><#NUM>|<#NUM>
<?carriage number> →<#NUM>
<?seat number 1> →<?seat number>
<?seat number 2> →<?seat number>
<?seat number> →<#NUM><#ENG>|<#NUM>
<?departure station> →<*>
<?departure time> →HH:mm
<?passenger> →<*>

Wherein, the expressions starting with "<?" are non-terminal symbols; the right part of the production "l" represents "or"; "<#ENG>" matches with an English character string; "<#NUM>" matches with a number character string; "MM", "dd", "HH" and "mm" respectively match with month, day, hour, minute; "<*>" matches with any character string.

In the above key word template, the non-terminal symbol start with "<?" in the right part of the production of "<?train ticket order template>" is the knowledge point that needs as extracted in the embodiments of the present invention.

Since the train ticket also comprises much other information, for example, seat type: sleeping berth, hard seat, second class seat and business class seat, etc., therefore the key word template constructed in the present invention is not limited to the above listed content.

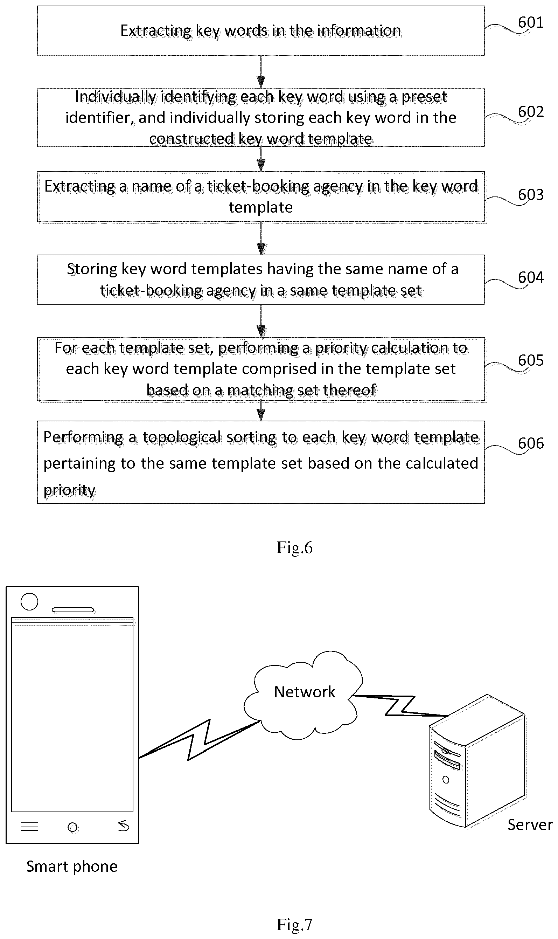

As shown in Fig. 6, Fig. 6 is a flowchart showing another information processing method according to an exemplary embodiment of the present invention, the method can be used in a server, and on the basis of the embodiment shown in Fig. 5, the above step 503 may comprise the following steps:
Step 601: extracting key words in the information.
Step 602: individually identifying each key word using a preset identifier, and individually storing each key word in the constructed key word template.
Step 603: extracting a name of a ticket-booking agency in the key word template;
Step 604: storing key word templates having the same name of a ticket-booking agency in a same template set.
Step 605: for each template set, performing a priority calculation to each key word template comprised in the template set based on a matching set thereof;

In one disclosed implementation, the process of the priority calculation in the steps in the present invention is as follows:
determining a short message set that can be matched with each key word template in the template set; when one short message set is a proper subset of another short message set, determining that the priority of the key word template corresponding to the one short message set is higher than the priority of the key word template corresponding to the another short message set; when one short message set is identical to another short message set, determining that the priority of the key word template corresponding to the one short message set is the same as the priority of the key word template corresponding to the another short message set; retaining one of the key word templates having the same priority, and deleting other key word templates having the same priority.

Since the wildcard "<*>" in the above embodiment can be matched with any character string, therefore a situation may occur where some short message can be matched with two or more key word templates in a same template set, and thus there is a need to calculate the priority of each key word template in advance.

Step 606: performing a topological sorting to each key word template pertaining to the same template set based on the calculated priority. In a disclosed implementation, the step 606 may also comprise:
when an information arranging format of the received information is inconsistent with a stored information arranging format, extracting the key words in the information; and updating the corresponding key word template based on the key words.

As shown in Fig. 7, Fig. 7 is a schematic diagram of the application scene of an information processing method according to an exemplary embodiment of the present invention. The scene shown in Fig. 7 comprises: a smart phone as the terminal and a server connected via network.

Wherein, the server obtains information received within a set time period; key words in the information is extracted, a key word template is established, each key word is identified individually using a preset identifier, each key word is individually stored in the constructed key word template, and a name of a ticket-booking agency in the key word template is extracted; the key word templates of the same name of a ticket-booking agency are stored in a same template set, and then the priority of each key word template in the same template set is calculated, a sorting is performed based on the magnitude of the priority, and the constructed key word template is sent to the terminal by the server. When the terminal receives the information, the terminal extracts a number of an income message in the information, determines that the information is a predetermined type of information, i.e., ticket information based on the number of the income message; and then, the terminal matches the information with the key word template sent by the server, and if there are more than two key words that are successfully matched, reads the priority of the key word templates, and then selects the key word template that has the highest priority, and extracts the key information in the information based on the key word template.

In the application scene shown in Fig. 7, reference can be made to the above mentioned descriptions of the Figs. 1-6 for the concrete process for realizing information processing, which will not be elaborated herein.

Corresponding to the embodiments of the aforementioned information processing method, the present invention also provides embodiments of an information processing apparatus, and a terminal and a server where it is employed.

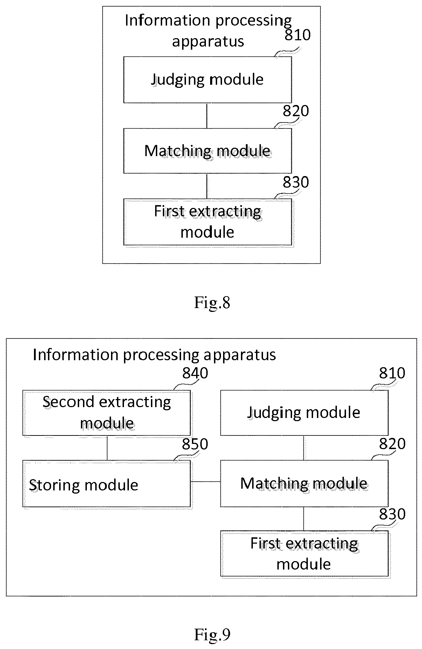

As shown in Fig. 8, Fig. 8 is a block diagram showing an information processing apparatus according to an exemplary embodiment of the present invention, and the apparatus may comprise: a judging module 810, a matching module 820 and a first extracting module 830.
a judging module 810 configured to, when information is received, judge whether the information is a predetermined type of information;
a matching module 820 configured to, when the judging module 810 judges that the information is the predetermined type of information, match the predetermined type of information with a key word template;
a first extracting module 830 configured to extract key information in the information based on the key word template successfully matched by the matching module 820.

The key word template matched by the matching module 820 comprises a plurality of key words which are individually stored.

Optionally, each key word in the key word template matched by the matching module 820 is identified individually using a preset identifier to construct a template structure.

In the above embodiment, the terminal can judge whether the received information is the predetermined type of information, when the information is the predetermined type of information, match the predetermined type of information with a key word template, and then extract key information in the information based on the successfully matched key word template. The present invention is able to accurately identify and extract key information such as train number, seat, departure/arrival station, departure/arrival time, order number, passenger in ticket information in which the key information is distributed very intensively, so as to remind the user based on the key information, and thereby improves the user experience.

As shown in Fig. 9, Fig. 9 is a block diagram showing another information processing apparatus according to an exemplary embodiment of the present invention. On the basis of the embodiment shown in the above Fig. 8, the apparatus may also comprise: a second extracting module 840 and a storing module 850.

The second extracting module 840 is configured to extract a name of a ticket-booking agency in the key word template;

The storing module 850 is configured to store key word templates having the same name of a ticket-booking agency extracted by the second extracting submodule 840 in a same template set.

In this above embodiment, the terminal can store the key word templates pertaining to a same ticket-booking agency in the same template set, so as to improve accuracy and efficiency of the subsequent matching of the templates.

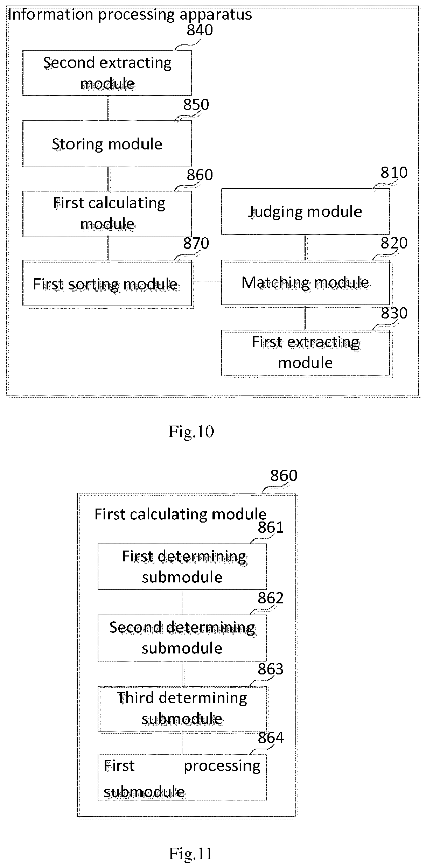

As shown in Fig. 10, Fig. 10 is a block diagram showing another information processing apparatus according to an exemplary embodiment of the present invention. On the basis of the embodiment shown in the above Fig. 9, the apparatus may also comprise: a first calculating module 860 and a first sorting module 870.

The first calculating module 860 is configured to, for each template set, perform a priority calculation to each key word template comprised in the template set based on a matching set thereof;

The first sorting module 870 is configured to perform a topological sorting to each key word template pertaining to a same template set based on the priority calculated by the first calculating module 860.

In the above embodiment, the terminal can perform a priority calculation to the key word templates in a same template set, and perform sorting based on the priority, so that when the same information can be successfully matched with a plurality of key word templates, the information is matched to the key word template that has the highest priority.

As shown in Fig. 11, Fig. 11 is a block diagram showing an information processing apparatus according to an exemplary embodiment. On the basis of the embodiment shown in the above Fig. 9, the first calculating module 860 may comprise: a first determining submodule 861, a second determining submodule 862, a third determining submodule 863 and a first processing submodule 864.

The first determining submodule 861 is configured to determine a short message set that can be matched with each key word template in the template set;

The second determining submodule 862 is configured to, when the first determining submodule 861 determines one short message set as a proper subset of another short message set, determine that the priority of the key word template corresponding to the one short message set is higher than the priority of the key word template corresponding to the another short message set;

The third determining submodule 863 is configured to, when the second determining submodule 862 determines one short message set as identical to another short message set, determine that the priority of the key word template corresponding to the one short message set is the same as the priority of the key word template corresponding to the another short message set;

The first processing submodule 864 is configured to retain one of the key word templates having the same priority as determined by the third determining submodule 863, and delete other key word templates having the same priority.

In the above embodiment, the terminal can determine the priority based on a short message set that can be matched to each key word template, and for the key word templates having the same priority, only one key word template is retained, so as to prevent redundant information from occupying the memory.

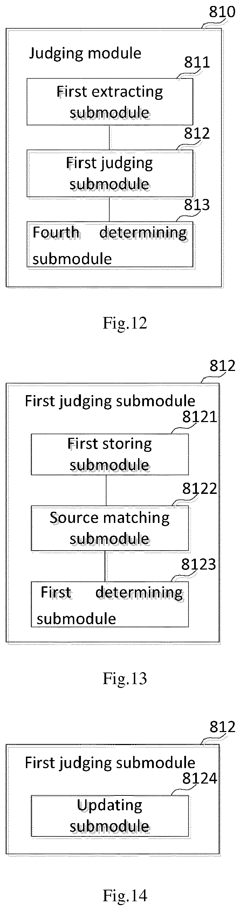

As shown in Fig. 12, Fig. 12 is a block diagram showing another information processing apparatus according to an exemplary embodiment of the present invention. On the basis of the embodiment shown in the above Figs. 8-11, the judging module 810 may comprise: a first extracting submodule 811, a first judging submodule 812 and a fourth determining submodule 813.

The first extracting submodule 811 is configured to extract source information in the information, which source information comprising a name of a ticket-booking agency and/or a number of an income message;

The first judging submodule 812 is configured to judge whether the source information extracted by the first extracting submodule 811 is a source of the predetermined type of information;

The fourth determining submodule 813 is configured to, when the first judging submodule 812 judges that the source information is the source of the predetermined type of information, determine the information as the predetermined type of information.

In the above embodiment, the terminal can determine whether the information is the predetermined type of information (i.e., the ticket information) based on source information of the information, i.e., the company name or the number of the income message in the information, and such a method can accurately determine whether the information is the predetermined type of information.

As shown in Fig. 13, Fig. 13 is a block diagram showing another information processing apparatus according to an exemplary embodiment of the present invention. On the basis of the embodiment shown in the above Fig. 12, the first judging submodule 812 may comprise: a first storing submodule 8121, a source matching submodule 8122 and a first determining submodule 8123.

The first storing submodule 8121 is configured to receive and store the source information sent by a server;

The source matching submodule 8122 is configured to match the source information in the information with the source information stored in the first storing submodule 8121;

The first determining submodule 8123 is configured to, when the source matching submodule 8122 successfully matches the source information in the information with the stored source information, determine the source information in the information as the source of the predetermined type of information.

In the above embodiment, the terminal can receive and store the source information sent by the server, and match the source information in the received information with the stored source information.

As shown in Fig. 14, Fig. 14 is a block diagram showing another information processing apparatus according to an exemplary embodiment of the present invention. On the basis of the embodiment shown in the above Fig. 13, the first judging submodule 812 further comprises: an updating submodule 8124.

The updating submodule 8124 is configured to, when the source updated information sent by the server is received, update the stored source information based on the source updated information.

In the above embodiment, the terminal can update the stored source information when it receives the source updated information sent by the server, so that it always stores the latest source information.

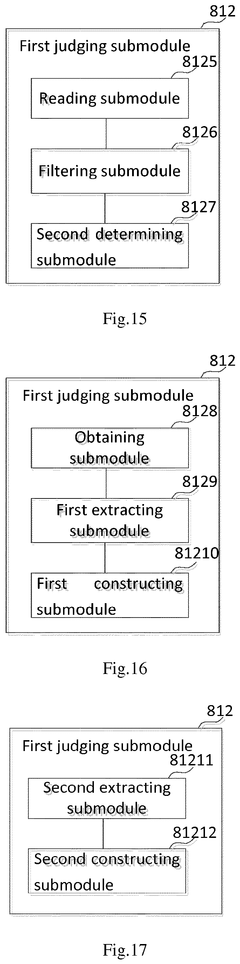

As shown in Fig. 15, Fig. 15 is a block diagram showing another information processing apparatus according to an exemplary embodiment of the present invention. On the basis of the embodiment shown in the above Fig. 12, the first judging submodule 812 may further comprise: a reading submodule 8125, a filtering submodule 8126 and a second determining submodule 8127.

The reading submodule 8125 is configured to read a preset filtering condition;

The filtering submodule 8126 is configured to filter the source information in the information based on the filtering condition read by the reading submodule 8125;

The second determining submodule 8127 is configured to determine the source information that matches with the filtering condition as the source of the predetermined type of information.

In the above embodiment, the terminal can set a filtering condition, and match the source information with the filtering condition, so as to filter out information from the source of the predetermined type of information.

As shown in Fig. 16, Fig. 16 is a block diagram showing another information processing apparatus according to an exemplary embodiment of the present invention. On the basis of the embodiment shown in the above Fig. 15, the first judging submodule 812 may also comprise: an obtaining submodule 8128, a first extracting submodule 8129 and a first constructing submodule 81210.

The obtaining submodule 8128 is configured to obtain the predetermined type of information received within a set time period;

The first extracting submodule 8129 is configured to extract key words in the predetermined type of information obtained by the obtaining submodule 8128;

The first constructing submodule 81210 is configured to construct a key word template based on the key words extracted by the first extracting submodule 8129.

In the above embodiment, the terminal can construct a key word template based on the key words in the predetermined type of information.

As shown in Fig. 17, Fig. 17 is a block diagram showing another information processing apparatus according to an exemplary embodiment. On the basis of the embodiment shown in the above Fig. 15, the first judging submodule 812 may further comprise: a second extracting submodule 81211 and a second constructing submodule 81212.

The second extracting submodule 81211 is configured to, when information conforming to the filtering condition is received for the first time, and no key word template corresponding to the information is stored, extract the key words in the information;

The second constructing submodule 81212 is configured to construct a key word template based on the key words extracted by the second extracting submodule 81211. In the above embodiment, when the terminal receives information conforming to the filtering condition for the first time and does not store a key word template corresponding to the information, it construct a key word template based on the key words in the information.

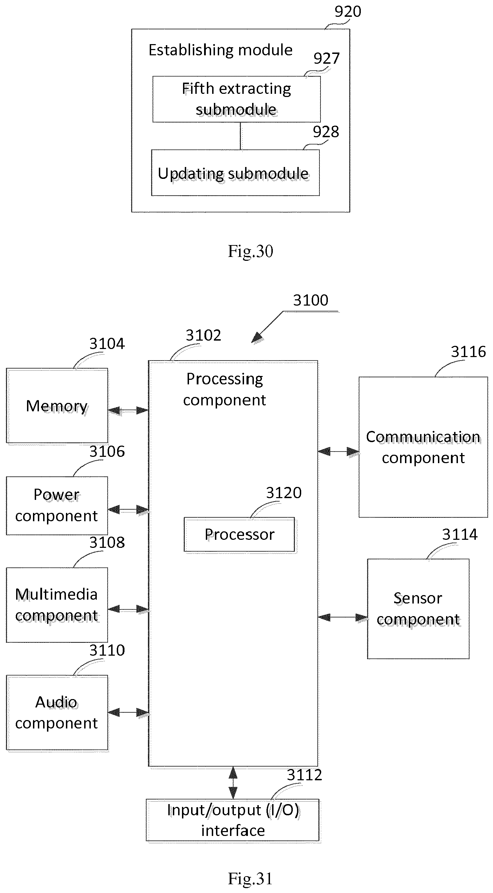

As shown in Fig. 31, Fig. 31 is a block diagram showing another information processing apparatus according to an exemplary embodiment of the present invention. On the basis of the embodiment shown in the above Fig. 17, the first judging submodule 812 may further comprise: a third extracting submodule 81213 and an updating submodule 81214.

The third extracting submodule 81213 is configured to, when information conforming to the filtering condition is received subsequently, extract the key words in the received information;

The updating submodule 81214 is configured to regulate and update the key word template based on the key words extracted by the third extracting submodule 81213.

In the above embodiment, the terminal can regulate and update the constructed key word template based on the subsequently received information conforming to the filtering condition, so as to improve the matching accuracy for the key word template.

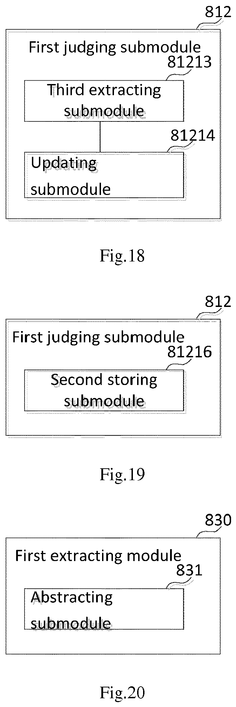

As shown in Fig. 19, Fig. 19 is a block diagram showing another information processing apparatus according to an exemplary embodiment of the present invention. On the basis of the embodiments shown in the above Figs. 13 or 15, the first judging submodule 812 may also comprise: a second storing submodule 81216.

The second storing submodule 81216 is configured to, when the source information comprising the filtering condition is the source information that has not been stored, individually store the source information in the key word template.

In the above embodiment, the terminal can individually store the source information comprising filtering condition that has not been stored in the key word template to enrich the contents of the key word template, thereby improving accuracy for the matching.

As shown in Fig. 20, Fig. 20 is a block diagram showing another information processing apparatus according to an exemplary embodiment of the present invention. On the basis of the embodiment shown in the above Fig. 8, the first extracting module 830 may comprise: an abstracting submodule 831.

The abstracting submodule 831 is configured to abstract key information corresponding to the preset identifier from the information based on the template structure of the successfully matched key word template.

In the above embodiment, the terminal can abstract the key information in a word-syntax mode, thereby realizing the accurate abstraction of intensive knowledge.

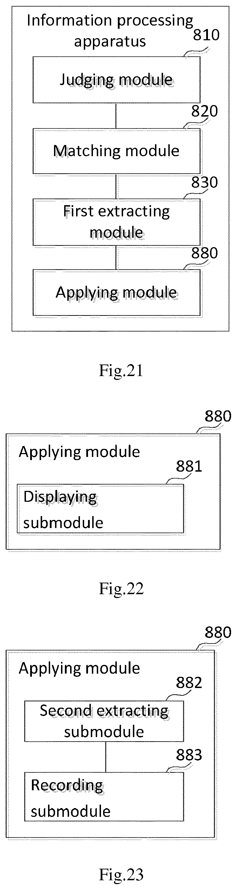

As shown in Fig. 21, Fig. 21 is a block diagram showing another information processing apparatus according to an exemplary embodiment of the present invention. On the basis of the embodiment shown in any one of the above Figs. 8-11, the apparatus may also comprise: an applying module 880.

The applying module 880 is configured to apply the key information.

As shown in Fig. 22, Fig. 22 is a block diagram showing another information processing apparatus according to an exemplary embodiment of the present invention. On the basis of the embodiment shown in the above Fig. 21, the applying module 880 may comprise: a display submodule 881.

The display submodule 881 is configured to display the key information with a preset display format.

In the above embodiment, the terminal can display the key information in a preset display format such as color and arrangement, so that the user can quickly get the key information.

As shown in Fig. 23, Fig. 23 is a block diagram showing another information processing apparatus according to an exemplary embodiment of the present invention. On the basis of the embodiment shown in the above Fig. 21, the applying module 880 may also comprise: a second extracting submodule 882 and a recording submodule 883.

The second extracting submodule 882 is configured to extract key event information in the key information;

The recording submodule 883 is configured to record the key event information extracted by the second extracting submodule 882 in a notepad/reminder time.

In the above embodiment, the terminal can record the key event information in the key information in a notepad or a reminder time, so as to remind the user to prevent the user from forgetting important events.

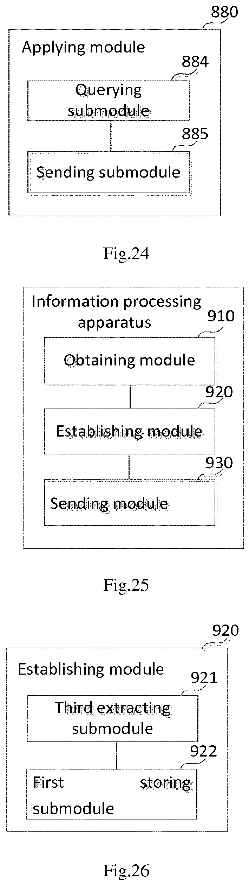

As shown in Fig. 24, Fig. 24 is a block diagram showing another information processing apparatus according to an exemplary embodiment of the present invention. On the basis of the embodiment shown in the above Fig. 21, the applying module 880 may also comprise: a querying submodule 884 and a sending submodule 885.

The querying submodule 884 is configured to query life information based on a date in the key information;

The sending submodule 885 is configured to send the life information queried by the querying submodule 884 to a user, wherein, the life information comprises one or more of weather information, accommodation information, dietary information, dressing information, traffic information, shopping information and communication information.

In the above embodiment, the terminal can obtain life information based on the key information, which facilitates trips of the user, provides conveniences in various aspects for the user and improves the user experience.

The embodiments of the information processing apparatus as shown in Fig. 8 to Fig. 24 can be applied in a terminal.

As shown in Fig. 25, Fig. 25 is a block diagram showing another information processing apparatus according to an exemplary embodiment, and the apparatus may comprise: an obtaining module 910, an establishing module 920 and a sending module 930.

The obtaining module 910 is configured to obtain information received within a set time period;

The establishing module 920 is configured to establish a key word template based on key words in the information obtained by the obtaining module 910;

The sending module 930 is configured to send the key word template established by the establishing module 920 to a terminal to cause the terminal to, when receiving the predetermined type of information, extract key information in the predetermined type of information based on the successfully matched key word template.

In the above embodiment, the server can establish a key word template based on key words in the plurality of information and send the constructed key word template to the terminal, so that the terminal, when receiving a predetermined type of information, can extract the key information based on the successfully matched key word template, which facilitates reminding to the user based on the key information, and thereby improves the user experience.

As shown in Fig. 26, Fig. 26 is a block diagram showing another information processing apparatus according to an exemplary embodiment of the present invention. On the basis of the embodiment shown in the above Fig. 25, the establishing module 920 may comprise: a third extracting submodule 921 and a first storing submodule 922.

The third extracting submodule 921 is configured to extract key words in the information;

The first storing submodule 922 is configured to individually identify each key word extracted by the third extracting submodule 921 using a preset identifier, and individually store each key word in the constructed key word template.

In the above embodiment, the server can individually identify the key word using a preset identifier, and individually store each key word in the constructed key word template.

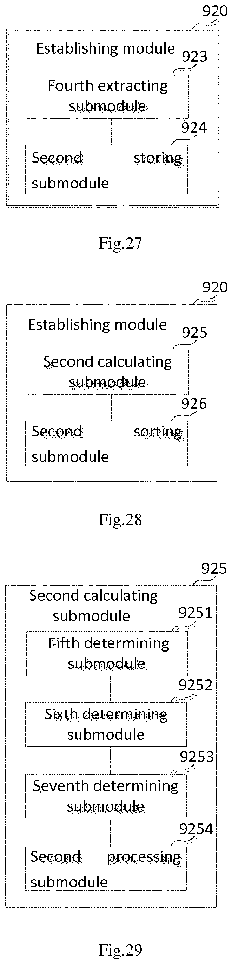

As shown in Fig. 27, Fig. 27 is a block diagram showing another information processing apparatus according to an exemplary embodiment of the present invention. On the basis of the embodiment shown in the above Fig. 26, the establishing module 920 may also comprise: a fourth extracting submodule 923 and a second storing submodule 924.

The fourth extracting module 923 is configured to extract a name of a ticket-booking agency in the key word template;

The second storing submodule 924 is configured to store the key word templates having the same name of a ticket-booking agency extracted by the fourth extracting submodule 923 in a same template set.

In the above embodiment, the server can store key word templates of a same ticket-booking agency in a same template set, so as to improve the efficiency of the subsequent template matching.

As shown in Fig. 28, Fig. 28 is a block diagram showing another information processing apparatus according to an exemplary embodiment of the present invention. On the basis of the embodiment shown in the above Fig. 27, the establishing module 920 may also comprise: a second calculating submodule 925 and a second sorting submodule 926.

The second calculating module 925 is configured to, for each template set, perform a priority calculation to each key word template comprised in the template set based on a matching set thereof;

The second sorting module 926 is configured to perform a topological sorting to each key word template pertaining to a same template set based on the priority calculated by the second calculating module 925.

In the above embodiment, the server can perform a priority calculation to the key word templates in a same template set, and perform sorting based on the priority, so that when the same information can be successfully matched with a plurality of key word templates, the information is matched to the key word template that has the highest priority.

As shown in Fig. 29, Fig. 29 is a block diagram showing another information processing apparatus according to an exemplary embodiment. On the basis of the embodiment shown in the above Fig. 26, the second calculating submodule 925 may comprise: a fifth determining submodule 9251, a sixth determining submodule 9252, a seventh determining submodule 9253 and a second processing submodule 9254.

The fifth determining submodule 9251 is configured to determine a short message set that can be matched with each key word template in the template set;

The sixth determining submodule 9252 is configured to, when the fifth determining submodule 9251 determines one short message set as a proper subset of another short message set, determine that the priority of the key word template corresponding to the one short message set is higher than the priority of the key word template corresponding to the another short message set;

The seventh determining submodule 9253 is configured to, when the sixth determining submodule 9252 determines one short message set as identical to another short message set, determine that the priority of the key word template corresponding to the one short message set is the same as the priority of the key word template corresponding to the another short message set;

The second processing submodule 9254 is configured to retain one of the key word templates having the same priority as determined by the seventh determining submodule 9253, and delete other key word templates having the same priority.

In the above embodiment, the server can determine the priority based on a short message set that can be matched to each key word template, and for key word templates having the same priority, only one key word template is retained, so as to prevent redundant information from occupying the memory.

As shown in Fig. 30, Fig. 30 is a block diagram showing another information processing apparatus according to an exemplary embodiment of the present invention. On the basis of the embodiment shown in the above Fig. 25, the establishing module 920 may also comprise: a fifth extracting submodule 927 and an updating submodule 928.

The fifth extracting submodule 927 is configured to, when an information arranging format of the received information is inconsistent with a stored information arranging format, extract the key words in the information;

The updating submodule 928 is configured to update the corresponding key word template based on the key words extracted by the fifth extracting submodule 927.

In the above embodiment, when the arranging format of the received information is inconsistent with the stored arranging format, the server can update the corresponding key word template based on the key words, so as to ensure an accuracy of the key word template.

The embodiment of the information processing apparatus as shown in the above Figs. 25-20 can be applied in the server for constructing a key word template.

Reference can be made to the implementing process of the corresponding steps in the above methods for the detailed implementing process of the functions and effects of each module in the above apparatus, which will not be elaborated herein.

Since the apparatus embodiments substantially correspond to the method embodiments, similar parts of the method embodiments may be referred to for the apparatus embodiments. The above apparatus embodiments are illustrative only. The modules described as separate members may be or may not be physically separated. The members described as modules may be or may not be physical modules, may be located at the same place or may be distributed in multiple network modules. The objectives of the solutions of this invention may be realized by selecting some or all of the modules according to the actual needs. The above can be understood and implemented by those skilled in the art without any inventive work.

Corresponding to Fig. 8, the present invention also provides a terminal, comprising:
a processor;
a memory for storing instructions executable by the processor;
wherein, the processor is configured to:
when information is received, judge whether the information is a predetermined type of information;
when the information is the predetermined type of information, match the predetermined type of information with a key word template;
extract key information in the information based on the successfully matched key word template.

Corresponding to Fig. 25, the present invention also provides a server, comprising:
a processor;
a memory for storing instructions executable by the processor;
wherein, the processor is configured to:
obtain information received within a set time period;
construct a key word template based on the key words in the information;
send the key word template to a terminal to cause the terminal to, when receiving a predetermined type of information, extract key information in the predetermined type of information based on the successfully matched key word template.

As shown in Fig. 31, Fig. 31 is a diagram showing a structure (terminal device side) of an information processing apparatus 3100 according to an exemplary embodiment of the present invention. For example, the apparatus 3100 may be a mobile phone, a computer, a digital broadcast terminal, a message sending and receiving equipment, a game console, a tablet device, a medical device, a fitness equipment, a personal digital assistant or the like that have a routing function.

With reference to Fig. 31, the apparatus 3100 can comprise one or more of the following components: a processing component 3102, a memory 3104, a power component 3106, a multimedia component 3108, an audio component 3110, an input/output (I/O) interface 3112, a sensor component 3114 and a communication component 3116.

The processing component 3102 typically controls overall operations of the apparatus 3100, such as the operations associated with display, telephone calls, data communications, camera operations, and recording operations. The processing component 3102 may include one or more processors 3120 to execute instructions to perform all or part of the steps in the above described methods. Moreover, the processing component 3102 may include one or more modules which facilitate the interaction between the processing component 3102 and other components. For instance, the processing component 3102 may include a multimedia module to facilitate the interaction between the multimedia component 3108 and the processing component 3102.

The memory 3104 is configured to store various types of data to support the operation of the apparatus 3100. Examples of such data include instructions for any applications or methods operated on the apparatus 3100, contact data, phonebook data, messages, pictures, video, etc. The memory 3104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3106 provides power to various components of the apparatus 3100. The power component 3106 may include a power management system, one or more power sources, and any other components associated with the generation, management, and distribution of power in the apparatus 3100.

The multimedia component 3108 includes a screen providing an output interface between the apparatus 3100 and the user. In some embodiments, the screen may include a liquid crystal display (LCD) and a touch panel (TP). If the screen includes a touch panel, the screen can be implemented as a touch screen to receive input signal from the user. The touch panel includes one or more touch sensors to sense touches, swipes and gestures on the touch panel. The touch sensor may not only sense a boundary of a touch or swipe action, but also a period of time and a pressure associated with the touch or swipe action. In some embodiments, the multimedia component 3108 includes a front camera and/or a rear camera. The front camera and the rear camera may receive an external multimedia datum while the apparatus 3100 is in an operation mode, such as a photographing mode or a video mode. Each of the front camera and the rear camera may be a fixed optical lens system or can have focal lengths and optical zoom functionality.

The audio component 3110 is configured to output and/or input audio signals. For example, the audio component 3110 includes a microphone ("MIC") configured to receive an external audio signal when the apparatus 3100 is in an operation mode, such as a call mode, a recording mode, and a voice recognition mode. The received audio signal may be further stored in the memory 3104 or transmitted via the communication component 3116. In some embodiments, the audio component 3110 further includes a speaker to output audio signals.

The I/O interface 3112 provides an interface between the processing component 3102 and peripheral interface modules, such as a keyboard, a click wheel, buttons, and the like. The buttons may include, but are not limited to, a home button, a volume button, a starting button, and a locking button.

The sensor component 3114 includes one or more sensors to provide status assessments of various aspects of the apparatus 3100. For instance, the sensor component 3114 may detect an open/closed status of the apparatus 3100, relative positioning of components, e.g., the display and the keypad, of the apparatus 3100, a change in position of the apparatus 3100 or a component of the apparatus 3100, a presence or absence of user contact with the apparatus 3100, an orientation or an acceleration/deceleration of the apparatus 3100, and a change in temperature of the apparatus 3100. The sensor component 3114 may include a proximity sensor configured to detect the presence of nearby objects without any physical contact. The sensor component 3114 may also include a light sensor, such as a CMOS or CCD image sensor, for use in imaging applications. In some embodiments, the sensor component 3114 may also include an accelerometer sensor, a gyroscope sensor, a magnetic sensor, a pressure sensor, a microwave sensor or a temperature sensor.

The communication component 3116 is configured to facilitate communication, wired or wirelessly, between the apparatus 3100 and other devices. The apparatus 3100 can access a wireless network based on a communication standard, such as WiFi, 2G, or 3G, or a combination thereof. In one exemplary embodiment, the communication component 3116 receives a broadcast signal or broadcast associated information from an external broadcast management system via a broadcast channel. In one exemplary embodiment, the communication component 3116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 3100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 3104, executable by the processor 3120 in the apparatus 3100, for performing the above-described methods. For example, the non-transitory computer-readable storage medium may be a ROM, a RAM, a CD-ROM, a magnetic tape, a floppy disc, an optical data storage device, and the like.

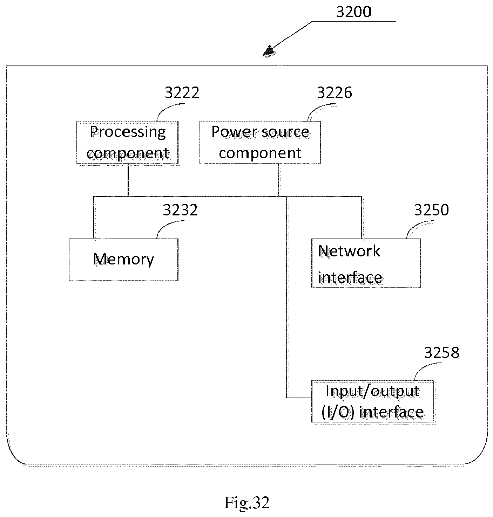

As shown in Fig. 32, Fig. 32 is a diagram showing a structure (server side) of an information processing apparatus 3200 according to an exemplary embodiment. For example, the apparatus 3200 may be provided as a router equipment. With reference to Fig. 32, the apparatus 3200 comprises a processing component 3222, which further comprises one or more processors, and a storage resource represented by the memory 3232 for storing instructions executable by the processing component 3222, such as application program. The application program stored in the memory 3232 may include one or more modules each corresponds to a set of instructions. In addition, the processing component 3222 is configured to execute instructions, so as to perform the above mentioned method for visiting web pages.

The apparatus 3200 may also include a power source component 3226 which is configured to execute power management for the apparatus 3200, a wired or wireless network interface 3250 which is configured to connect the apparatus 3200 to a network, and an input/output (I/O) interface 3258. The apparatus 3200 can operate the operation system stored in the memory 3232, for example, Windows Server ^{™}, Mac OS X^{™}, Unix ^{™}, Linux ^{™}, Free BSD ^{™} or the like.

Other embodiments of the invention will be apparent to those skilled in the art from consideration of the specification and practice of the invention disclosed here. The present invention is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

The aforementioned embodiments are just preferred embodiments of the present invention, and are not used to limit the present invention. Any modification, equivalent substitution and improvements made within the range of the principles of the present invention should be included into the protection scope of the present invention.

## Claims

1. An information processing method, **characterized by** comprising:
when information is received, judging whether the information is a predetermined type of information;
when the information is the predetermined type of information, matching the predetermined type of information with a key word template;
extracting key information in the information based on the successfully matched key word template.

2. The method according to claim 1, **characterized in that**, the key word template comprises a plurality of key words which are individually stored.

3. The method according to claim 1 or 2, **characterized in that**, each key word in the key word template is individually identified using a preset identifier to construct a template structure.

4. The method according to any one of claims 1 to 3, **characterized by** further comprising:
extracting a name of a ticket-booking agency in the key word template;
storing the key word templates having the same name of a ticket-booking agency in a same template set.

5. The method according to claim 4, **characterized by** further comprising:
for each template set, performing a priority calculation to each key word template comprised in the template set based on a matching set thereof;
performing a topological sorting to each key word template pertaining to the same template set based on the calculated priority.

6. The method according to claim 5, **characterized in that**, performing a priority calculation to each key word template comprised in the template set based on a matching set thereof comprises:
determining a short message set that can be matched with each key word template in the template set;
when one short message set is a proper subset of another short message set, determining that the priority of the key word template corresponding to the one short message set is higher than the priority of the key word template corresponding to the another short message set;
when one short message set is identical to another short message set, determining that the priority of the key word template corresponding to the one short message set is the same as the priority of the key word template corresponding to the another short message set;
retaining one of the key word templates having the same priority, and deleting other key word templates having the same priority.

7. The method according to any one of claims 1-6, **characterized in that**, determining whether the information is the predetermined type of information comprises:
extracting source information in the information, the source information comprising a name of a ticket-booking agency and/or a number of an income message;
judging whether the source information is a source of the predetermined type of information;
when it is judged that the source information is the source of the predetermined type of information, determining the information as the predetermined kind of information.

8. The method according to claim 7, **characterized in that**, determining whether the source information is a predetermined type of information comprises:
receiving and storing the source information sent from a server;
matching the source information in the information with the stored source information;
when the source information in the information is successfully matched with the stored source information, determining the source information in the information as the source of the predetermined type of information.

9. The method according to claim 7 or 8, **characterized in that**, determining whether the source information is a predetermined type of information comprises:
reading a preset filtering condition;
filtering the source information in the information based on the filtering condition;
determining the source information that matches with the filtering condition as the source of the predetermined type of information.

10. The method according to claim 7 to 9, **characterized by** further comprising:
obtaining the predetermined type of information received within a set time period;
extracting key words in the predetermined type of information;
constructing a key word template based on the key words.

11. The method according to claim 9 or 10, **characterized by** further comprising:
when information conforming to the filtering condition is received for the first time, and no key word template corresponding to the information is stored, extracting key words in the information;
constructing a key word template based on the key words.

12. The method according to claim 11, **characterized by** further comprising:
when information conforming to the filtering condition is received subsequently, extracting the key words in the received information;
regulating and updating the key word template based on the extracted key words.

13. The method according to claim 7 to 12, **characterized by** further comprising:
when the source information comprising the filtering condition is the source information that has not been stored, storing the source information in the key word template individually.

14. The method according to any one of claims 3 to 13, **characterized in that**, extracting key information in the information based on the successfully matched key word template comprises:
extracting key information corresponding to the preset identifier from the information based on the template structure of the successfully matched key word template.

15. An information processing apparatus, **characterized by** comprising:
a judging module configured to, when information is received, judge whether the information is a predetermined type of information;
a matching module configured to, when the judging module judges the information as the predetermined type of information, match the predetermined type of information with a key word template;
a first extracting module configured to extract key information in the information based on the key word template successfully matched by the matching module.
